# EUROPEAN PATENT APPLICATION

(11) **EP 4 099 657 A1**
(43) Date of publication of application: **07.12.2022**
(21) Application number: 21767309.4
(22) Date of filing: 06.03.2021
(51) Int. Cl.: H04L 29/06, H04L 9/32, H04L 9/08, H04L 9/06, H04L 12/721, H04L 29/12

(54) **METHOD AND DEVICE FOR PREVENTING REPLAY ATTACK ON SRV6 HMAC CHECK**

(30) Priority: 11.03.2020 CN 202010165217; 29.04.2020 CN 202010358287
(71) Applicant: Huawei Technologies Co., Ltd., Shenzhen, Guangdong 518129, (CN)
(72) Inventor: LU, Dongjie, Shenzhen, Guangdong 518129 (CN); GU, Rui, Shenzhen, Guangdong 518129 (CN); WU, Di, Shenzhen, Guangdong 518129 (CN); ZHOU, Yu, Shenzhen, Guangdong 518129 (CN)
(74) Representative: Isarpatent
(86) International application number: PCT/CN2021/079429
(87) International publication number: WO 2021/180012

(57) **Abstract**

This application provides a method and an apparatus for preventing a replay attack on an SRv6 HMAC verification. The method includes: After receiving an SRv6 packet, a network device obtains anti-replay attack verification information carried in the packet, performs anti-replay attack verification based on the anti-replay attack verification information, and continues to perform HMAC hash computation on a packet that passes the verification, or discards a packet that fails the verification. When an attacker sends a large quantity of replay attack packets to the network device, this method effectively reduces hash computation performed when an HMAC verification is performed on the large quantity of replay attack packets in a conventional technology, saves computing resources of the device, and improves efficiency of processing a normal packet.

## Description

This application claims priority to Chinese Patent Application No. CN202010165217.3, filed on March 11, 2020, and priority to Chinese Patent Application No. CN202010358287.0, filed on April 29, 2020, which are incorporated herein by reference in their entireties.

### TECHNICAL FIELD

This application relates to the field of communication technologies, and in particular, to a method and a device for preventing a replay attack on a segment routing over Internet Protocol version 6 (English: Internet Protocol version 6, IPv6) (segment routing over IPv6, SRv6) keyed hashed message authentication code (English: keyed hashed message authentication code, HMAC) verification.

### BACKGROUND

SRv6 is a method, designed based on source routing, for IPv6 data packet forwarding on a network. A segment routing header (English: Segment Routing Header, SRH) is inserted into an IPv6 packet, and an explicit IPv6 address stack is pushed into the SRH. Transit nodes continuously update a destination address and offset the address stack to complete hop-by-hop forwarding.

When an SRv6 technology is used to forward a packet, a transit node forwards the packet based on an SID list. A network hacker can maliciously tamper with the SID list to launch a network attack, affecting network security. To prevent the SRH from being tampered with and spoofed, the Internet Engineering Task Force (English: internet engineering task force, IETF) recommends that a verification be performed on the SRH by using an HMAC, and a packet that fails the HMAC verification is discarded, so as to prevent an SRv6 packet header from being spoofed and tampered with. However, the HMAC verification occupies many computing resources for HMAC computation. When an attacker sends a large quantity of replay attack packets to a network node, the network node needs to perform the HMAC verification on the large quantity of replay attack packets, which severely occupies computing resources. Consequently, a normal packet cannot be effectively processed, and normal work of the network node is severely affected.

### SUMMARY

In view of this, embodiments of this application provide a method, an apparatus, and a system for preventing a replay attack on an SRv6 HMAC verification.

According to a first aspect, this application provides a method for preventing a replay attack on a segment routing over Internet Protocol version 6 keyed hashed message authentication code SRv6 HMAC verification. The method is performed by a first network device. The first network device receives a first SRv6 packet from a second network device or an attacker device, where a packet header of the first SRv6 packet includes anti-replay attack verification information. The first network device performs anti-replay attack verification on the first SRv6 packet based on the anti-replay attack verification information, to determine whether the first SRv6 packet is a replay attack packet. If the first SRv6 packet passes the verification, the first network device performs HMAC computation on the first SRv6 packet that passes the verification. If the first SRv6 packet fails the verification, the first network device discards the first SRv6 packet and does not perform HMAC computation.

According to the foregoing method, after receiving an SRv6 packet and before performing HMAC computation, the first network device verifies the received SRv6 packet based on anti-replay attack verification information carried in the SRv6 packet, and discards, in a timely manner, a packet that fails the verification. Therefore, before HMAC computation is performed, a large quantity of replay attack packets can be effectively identified and discarded, to effectively reduce computing resource consumption of a node, reduce network forwarding resources occupied by the large quantity of replay attack packets, and effectively prevent an impact of a replay attack on a normal service.

According to a second aspect, this application provides a method for preventing a replay attack on a segment routing over Internet Protocol version 6 keyed hashed message authentication code SRv6 HMAC verification. The method is performed by a second network device. The method includes: The second network device generates a first SRv6 packet, where a packet header of the first SRv6 packet includes anti-replay attack verification information. The second network device sends the first SRv6 packet to a first network device, where the anti-replay attack verification information is used by the first network device to verify, before HMAC computation is performed, whether the first SRv6 packet is a replay attack packet.

According to the foregoing method, when generating an SRv6 packet, a network device includes anti-replay attack verification information in the packet, so that a node that receives the packet can verify, based on the anti-replay attack verification information and before HMAC computation, whether the SRv6 packet is a replay attack packet. Further, before HMAC computation, the receive node can identify and discard the replay attack packet in a timely manner, to effectively reduce computing resource consumption of the node, reduce network forwarding resources occupied by a large quantity of replay attack packets, and effectively prevent an impact of a replay attack on a normal service.

According to a third aspect, this application provides a method for preventing a replay attack on a segment routing over Internet Protocol version 6 keyed hashed message authentication code SRv6 HMAC verification. The method is performed by a control management device. The method includes: The control management device generates anti-replay attack verification information, where the anti-replay attack verification information is used by a network node to perform anti-replay attack verification on an SRv6 packet that carries the anti-replay attack verification information. The control management device sends the anti-replay attack verification information to a second network device. After receiving the anti-replay attack verification information, the second network device generates the corresponding SRv6 packet. Before performing HMAC computation, the network node receiving the SRv6 packet can effectively identify and discard a large quantity of replay attack packets based on the anti-replay attack verification information carried in the packet, thereby avoiding performing HMAC computation on the large quantity of replay attack packets. Therefore, the node in a network device can effectively reduce computing resource consumption of the node, to reduce network forwarding resources occupied by the large quantity of replay attack packets, and effectively preventing an impact of a replay attack on a normal service. The control management device delivers the anti-replay attack verification information to the network node, so that SRH (English: segment routing header, SRH) information can be delivered in a centralized manner, and there is no need to separately perform a configuration on a plurality of forwarding nodes, thereby simplifying configurations of the forwarding nodes.

Optionally, the control management device generates an HMAC verification policy, where the anti-replay attack verification information is carried in the HMAC verification policy, and the control management device sends the HMAC verification policy to the corresponding network node. The control management device delivers the HMAC verification policy in a centralized manner, to implement centralized control of the HMAC verification policy, so that the forwarding nodes do not need to separately configure the HMAC verification policy, thereby effectively simplifying the configurations of the forwarding nodes.

Optionally, the control management device generates the segment routing header information. The SRH information carries the anti-replay attack verification information and a segment list segment list corresponding to forwarding paths. The control management device delivers the anti-replay attack verification information to the corresponding network node while delivering the SRH information to the corresponding network node. Therefore, after performing centralized path computation, the control management device can send the anti-replay attack verification information together with path information to the corresponding forwarding nodes, thereby effectively simplifying the configurations of forwarding nodes.

Optionally, in the foregoing aspects, the anti-replay attack verification information includes one or more of the following information: a timestamp, a nonce, and a sequence number. When the anti-replay attack verification is performed by using the timestamp, the network node does not need to store time information locally, and may perform the anti-replay attack verification on the packet based on the timestamp carried in the packet and current time of receiving the packet. In this way, the network node does not need to maintain a large amount of data, thereby reducing a burden caused by data maintenance on the device and reducing network resources occupied by the data. When the anti-replay attack verification is performed by using the nonce or the sequence number, because either the nonce or the sequence number can uniquely identify a packet, a replay attack packet can be effectively identified.

Optionally, in the foregoing aspects, the anti-replay attack verification information includes the timestamp, and that a first network device performs anti-replay attack verification on a first SRv6 packet includes: The first network device verifies whether a deviation between the timestamp and the current time of the first network device meets a preset condition.

Optionally, in the foregoing aspects, the anti-replay attack verification information includes the nonce, and that a first network device performs anti-replay attack verification on a first SRv6 packet includes: The first network device verifies, based on a locally recorded nonce, whether the nonce carried in the first SRv6 packet is valid.

Optionally, in the foregoing aspects, the anti-replay attack verification information includes the sequence number, and that a first network device performs anti-replay attack verification on a first SRv6 packet includes: The first network device verifies, based on a locally recorded packet sequence number, whether the sequence number carried in the first SRv6 packet is valid.

Optionally, in the foregoing aspects, the packet header includes an extended type length value TLV field, and the extended TLV field is used to carry the anti-replay attack verification information.

Optionally, in the foregoing aspects, a Type type field of the TLV field indicates that the TLV field is used to carry the SRv6 HMAC anti-replay attack verification information.

Optionally, in the foregoing aspects, the extended TLV field is an extended HMAC TLV field, and the extended HMAC TLV field is further used to carry an HMAC encryption identifier HMAC key ID and an HMAC. An existing HMAC TLV field is extended, so that the existing field can be reused, another field of the packet is saved, and additional overheads are avoided.

Optionally, in the foregoing aspects, the packet header includes first indication information, and the first indication information is used to identify a type of the anti-replay attack verification. The indication information is added to the packet to indicate the type of the anti-replay attack verification, so that when a plurality of anti-replay attack manners are used, the network node can perform the anti-replay attack verification on the packet based on identification information by using a corresponding verification solution. In this way, an anti-replay attack level can be further improved.

Optionally, in the foregoing aspects, the first indication information includes a first bit, and the first bit is used to identify whether the anti-replay attack verification is performed by using the nonce.

Optionally, in the foregoing aspects, the first indication information includes a second bit, and the second bit is used to identify whether the anti-replay attack verification is performed by using the timestamp.

Optionally, in the foregoing aspects, the first indication information includes a third bit, and the third bit is used to identify whether the anti-replay attack verification is performed by using the sequence number.

Optionally, in the foregoing aspects, the second network device obtains the anti-replay attack verification information from the control management device.

Optionally, in the foregoing aspects, the anti-replay attack verification information is used as a hash factor of HMAC computation to perform the HMAC computation. In this case, even if an attacker modifies a value of the anti-replay attack verification information after generating an attack packet, because HMAC computation uses the anti-replay attack verification information as the hash factor for hash computation, an HMAC obtained by a node R2 through computation is different from an HMAC carried in the packet, and an HMAC verification fails. This can effectively prevent the attack.

According to a fourth aspect, an embodiment of this application provides a network device, including a communication interface and a processor connected to the communication interface. The network device is configured to perform the method according to any one of the foregoing aspects or implementations via the communication interface and the processor.

According to a fifth aspect, an embodiment of this application provides a control management device, including a communication interface and a processor connected to the communication interface. The control management device is configured to perform, via the communication interface and the processor, the method performed by the control management device in any one of the foregoing aspects.

According to a sixth aspect, an embodiment of this application provides a network node, including a memory and a processor. The memory is configured to store program code, and the processor is configured to run instructions in the program code, so that the network node performs the method according to any one of the foregoing aspects or implementations.

According to a seventh aspect, an embodiment of this application provides a control management device. The control management device includes a memory and a processor, the memory is configured to store program code, and the processor is configured to run instructions in the program code, so that the control management device performs the method performed by the control management device in any one of the foregoing aspects or implementations.

According to an eighth aspect, an embodiment of this application provides a computer-readable storage medium. The computer-readable storage medium stores instructions. When the instructions are run on a computer, the computer is enabled to perform the method according to any one of the foregoing aspects or implementations.

According to a ninth aspect, an embodiment of this application provides a communication system. The communication system includes the network node according to the fourth aspect or the sixth aspect and the control management device according to the fifth aspect or the seventh aspect.

### BRIEF DESCRIPTION OF DRAWINGS

FIG. 1 is a schematic diagram of a structure of an SRv6 packet according to an embodiment of this application;
FIG. 2a is a schematic diagram of a network architecture according to an embodiment of this application;
FIG. 2b is a schematic diagram of another network architecture according to an embodiment of this application;
FIG. 3 is a schematic flowchart of a method for preventing a replay attack on an SRv6 HMAC verification according to an embodiment of this application;
FIG. 4a is a schematic diagram of a structure of an SRv6 packet according to an embodiment of this application;
FIG. 4b is a schematic diagram of a structure of another SRv6 packet according to an embodiment of this application;
FIG. 5 is a schematic flowchart of a method for preventing a replay attack on an SRv6 HMAC verification according to an embodiment of this application;
FIG. 6 is a schematic flowchart of a method for preventing a replay attack on an SRv6 HMAC verification according to an embodiment of this application;
FIG. 7 is a schematic flowchart of a method for preventing a replay attack on an SRv6 HMAC verification according to an embodiment of this application;
FIG. 8 is a schematic flowchart of a method for preventing a replay attack on an SRv6 HMAC verification according to an embodiment of this application;
FIG. 9 is a schematic diagram of a structure of a network device according to an embodiment of this application;
FIG. 10 is a schematic diagram of a structure of a control management device according to an embodiment of this application;
FIG. 11 is a schematic diagram of a structure of a network device according to an embodiment of this application;
FIG. 12 is a schematic diagram of a structure of a control management device according to an embodiment of this application;
FIG. 13 is a schematic diagram of a structure of a network device according to an embodiment of this application;
FIG. 14 is a schematic diagram of a structure of a control management device according to an embodiment of this application; and
FIG. 15 is a schematic diagram of a structure of a network device according to an embodiment of this application.

### DESCRIPTION OF EMBODIMENTS

The following describes technical solutions of embodiments in this application with reference to accompanying drawings. A network architecture and a service scenario described in embodiments of this application are intended to describe the technical solutions in embodiments of this application more clearly, and do not constitute a limitation on the technical solutions provided in embodiments of this application. Persons of ordinary skill in the art may know that: With the evolution of the network architecture and the emergence of new service scenarios, the technical solutions provided in embodiments of this application are also applicable to similar technical problems.

Ordinal numbers such as "1", "2", "3", "first", "second", and "third" in this application are used to distinguish between a plurality of objects, but are not used to limit a sequence of the plurality of objects.

"A and/or B" mentioned in this application should be understood as including the following cases: Only A is included, only B is included, or both A and B are included.

For SRv6 and technologies related to an HMAC verification and HMAC computation performed on an SRH in this application, refer to related descriptions of IETF Request For Comments (English: Request For Comments, RFC) 8402, RFC 8754, and RFC 2104. RFC 8402, RFC 8754, and RFC 2104 are incorporated into this application by reference in their entireties.

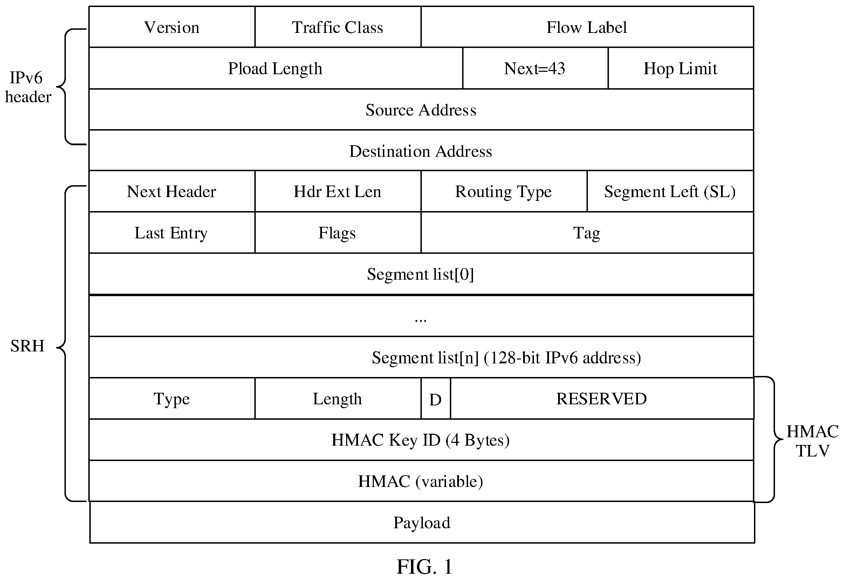

To facilitate understanding of the technical solutions of this application, the following explains and describes some technical terms in this application with reference to FIG. 1.

FIG. 1 is a schematic diagram of a structure of an SRv6 packet according to an embodiment of this application. As shown in FIG. 1, the SRv6 packet includes an IPv6 header (IPv6 header), a segment routing header SRH, and a payload (payload). The SRH includes an HMAC TLV and a segment identifier list (segment identifier list, SID list) that indicates packet forwarding paths. The segment identifier list may also be referred to as a segment list segment list. In this application, the segment identifier list and the segment list are usually used interchangeably.

In an implementation, the SID list may include segment identifiers SIDs of several nodes, for example, include several IPv6 addresses. The SIDs of the nodes indicate the nodes passed through in a packet forwarding process. In another implementation, the SID list may include SIDs of several adjacent links, and the SIDs of the adjacent links indicate the adjacent links through which a packet is forwarded. The adjacent link refers to a direct link between two nodes. In still another implementation, the SID list may further include an SID of a node and an SID of an adjacent link. The IPv6 header includes a destination address (destination address, DA) field. A value of the DA field changes in an SRv6 packet forwarding process. The SRH includes a segment left (segment left, SL) field. The SL field indicates a quantity of SIDs in the SID list that are not processed. The SL is numbered from 0. When a value of the SL is equal to m, a quantity of SIDs in the SID list that are not processed is m+1, and a segment list[m] is currently being processed. Processing an SID in the SID list means forwarding a packet to a node indicated by the SID.

In an implementation, when the value of the SL is equal to m, a destination address in the IPv6 header is an address indicated by the segment list[m]. When forwarding the SRv6 packet, a network node can determine, based on the value of the SL field and the SID list, a next-hop destination node to forward the packet. For example, after a transit node receives the SRv6 packet, if the destination address in the SRv6 packet is an address of the transit node, the transit node may subtract 1 from the value of the SL field, use a value of the SL field, obtained by subtracting 1, as an index to determine the next-hop node to forward the packet. After determining the next-hop node to forward the packet, the transit node changes the value of the destination address field to an IPv6 address of the determined next-hop node.

In another implementation, considering that a length of an Ethernet packet needs to be within a proper range, if the SID list occupies a large data amount, a data amount of the payload is affected. If the data amount of the payload becomes smaller, network performance of an entire network is affected. Therefore, the SID list in the SRv6 packet obtained by the network node from a head node may not include the destination address carried in the IPv6 header, to reduce a data amount occupied by the SID list. In this scenario, the quantity, of SIDs that are not processed, indicated by the SL field in the SRv6 packet obtained by the network node is greater than a value of LAST Entry. During SRv6 packet forwarding, if the SID list does not include the destination address carried in the IPv6 header, this SRv6 packet forwarding mode may also be referred to as a reduce mode. Correspondingly, if the SID list includes the destination address carried in the current IPv6 header, this SRv6 packet forwarding mode may also be referred to as a common mode.

The HMAC TLV field includes an HMAC encryption identifier (HMAC key ID) field and an HMAC field. The HMAC key ID field is used for generating a pre-shared key (pre-shared key) and an algorithm that are required by an HMAC, and the field may include 4 bytes. The HMAC field is used to carry the HMAC. The HMAC TLV is an extended TLV of the SRH and provides an HMAC verification for some fields in the IPv6 packet header and some fields in the SRH. In an example, specific fields used in HMAC computation that are defined in RFC 8754 are as follows.

An IPv6 Header is a header of an IPv6 packet, where Source Address indicates a source address of the IPv6 packet.

In SRH, Last Entry (1 byte) in an SRv6 segment list indicates an index of the last element in the segment list.

In the SRH, "Flags" (1 byte) is an extended field, and a default value is all 0s.

In the SRH, all addresses in the segment list are with variable lengths.

In the SRH, HMAC key ID (4 bytes) is a key value in an HMAC verification, and uniquely identifies an HMAC algorithm and a shared key used in the HMAC verification.

In the SRH, "HMAC 16 bits following length" indicates that a length field in an HMAC TLV field is followed by 16 bits. In RFC 8754, the 16 bits following the length field correspond to a D bit and a Reserved field shown in FIG. 1. HMAC is a keyed hashed message authentication code (keyed hashed message authentication code), and may also be referred to as a hash-based message authentication code.

As shown in FIG. 1, the HMAC field indicates a data digest of specific fields in the SRv6 packet. The field usually includes 8 bytes, and may include a maximum of 32 bytes by the date of this patent application. The specific fields include, for example, a source address (source address, SA) field, a segment list maximum identifier (English: last entry) field, a "flags" (English: flags) field, a SID list field, and the HMAC key ID field that are shown in FIG. 1.

HMAC verification: A specific HMAC verification process is defined in RFC 8754. According to descriptions in RFC 8754, the HMAC verification starts by verifying whether a current segment in the SRH is the same as a destination address in the IPv6 packet header. After the verification is successful, HMAC computation starts. In RFC 8754, how to verify whether the current segment is equal to the destination address of the IPv6 header in the reduce mode and the normal mode described above is separately described, and details are not described herein. RFC 2104 defines an existing HMAC computation method. An HMAC field in an SRH is an output of HMAC computation. After receiving an SRv6 packet, if the packet passes the HMAC verification, a network node continues to process the packet; if the packet fails the HMAC verification, the network node discards the received SRv6 packet. It should be noted that a specific HMAC verification process and specific fields used in HMAC computation in embodiments of this application are not limited to the manner described in RFC 8754.

HMAC computation: When a node configured with an HMAC verification receives an SRv6 packet, the node parses an HMAC key ID field and uses the HMAC key ID as an index to search for a key and a hash algorithm used in the HMAC verification. Then, the node computes specific fields in the received SRv6 packet based on the found key and hash algorithm to obtain a data digest. The node compares the computed data digest with a value of an HMAC field in the SRv6 packet. If the two values are the same, the SRv6 packet is not tampered with and can be forwarded. If the two values are different, the SRv6 packet has been tampered with. In this case, the packet can be discarded.

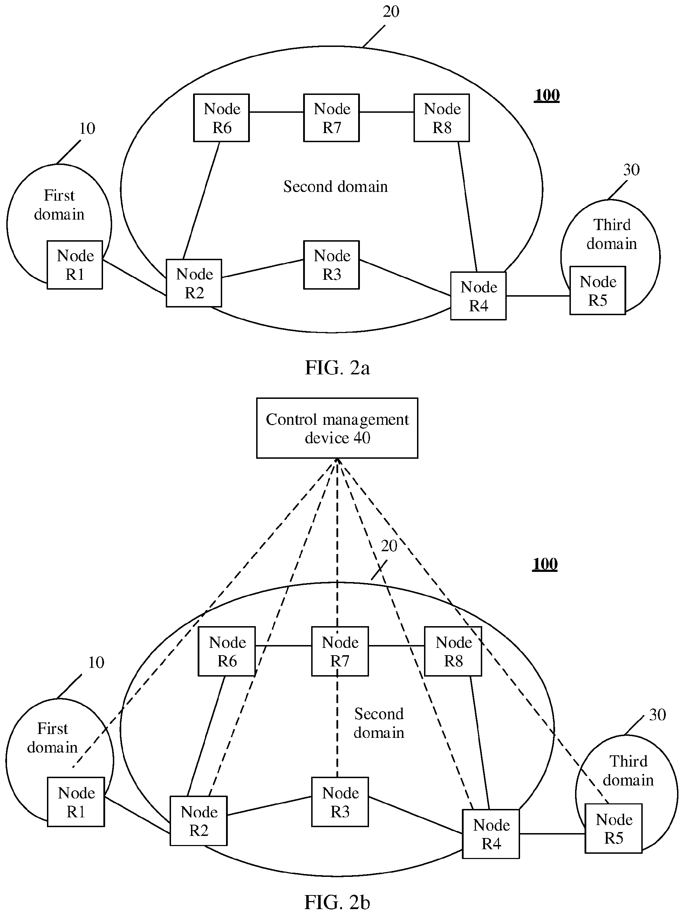

FIG. 2a and FIG. 2b are schematic diagrams of application scenarios of an HMAC verification according to an embodiment of this application. In an example, as shown in FIG. 2a, a network 100 includes a first domain 10, a second domain 20, and a third domain 30. In a specific implementation, the domain 20 may be an SRv6 domain. In another specific implementation, the domain 10 and/or the domain 30 may also each be an SRv6 domain. The domain 10 includes a node R1, the domain 20 includes nodes R2, R3, R4, R6, R7, and R8, and the domain 30 includes a node R5. The domain 20 may be an SRv6 trusted domain, and the node R2 is an edge node of the trusted domain 20. The node R2 may directly communicate with the node R1, and the node R4 may directly communicate with the node R5. In some embodiments, the domain 10 and the domain 30 may also be defined as SRv6 trust domains. In embodiments of this application, an SRv6 trusted domain may belong to an access network, a bearer network, a core network, an operator network, or a campus network. This is not specifically limited in embodiments of this application. In another example, as shown in FIG. 2b, based on the network architecture shown in FIG. 2a, the network 100 may further include a control management device 40. The control management device 40 is communicatively connected to the network devices in the network 100. The control management device may be, for example, configured to compute a path, allocate segment lists corresponding to forwarding paths, and deliver information required by an HMAC TLV. For example, the control management device mentioned in embodiments of this application may be a device that runs network management software, may be a controller, or may be a software module that implements a related function. This is not specifically limited in embodiments of this application. In an example, the domain 20 may belong to an operator network, the node R2 is used as an operator edge device, the first domain 10 belongs to an enterprise network, and the node R1 is a customer-premises equipment (customer-premises equipment, CPE) device.

With reference to a scenario in FIG. 2b, the following describes an HMAC verification procedure by using an example.

As shown in FIG. 2b, the head node R1 generates a packet sent from the node R1 to the node R5, and the packet is forwarded in the SRv6 domain 20 through the nodes R2->R3->R4. The SRv6 packet may be in a packet format shown in FIG. 1. Whether to perform an HMAC verification on the nodes R2, R3, and R4 may be configured as required. In this example, an HMAC verification policy is configured on the R2. The verification policy includes but is not limited to: an interface configured for the HMAC verification, a shared key configured for an HMAC, a hash algorithm configured to be used in the HMAC verification, and the like.
1. The R1 generates an SRv6 packet carrying a segment list and an HMAC TLV.

In the SRv6 packet, an SA field in an IPv6 packet header carries an address of the R1, a DA field in the IPv6 packet header carries an address of the R2, and an SRH carries the segment list.

In a specific implementation, the DA field carries an address SID 2 of the R2. The segment list in the SRH includes three segment identifiers: SID 4, SID 3, and SID 2, respectively indicating the node R4, the node R3, and the node R2. Segment left is equal to 2.

In another specific implementation, when the domain 20 is configured as an SRv6 trusted domain, an SRv6 packet may access the domain 20 based on a BSID. The BSID is used to identify one forwarding path. In this case, the DA field in the IPv6 packet header carries the BSID. Specifically, in an example, the control management device may generate the BSID for identifying the forwarding path that is in the trusted domain. Correspondingly, when computing forwarding paths of the SRv6 packet, the control management device may obtain the segment list including the BSID. In addition, after generating the BSID, the control management device may send a correspondence between the BSID and the forwarding path indicated by the BSID to the edge node R2 of the trusted domain, so that the edge node R2 of the trusted domain verifies the SRv6 packet, and forwards the packet in the trusted domain when the SRv6 packet passes the verification. In another example, the edge node R2 of the trusted domain may generate the BSID, and send a correspondence between the BSID and the forwarding path indicated by the BSID to the control management device, so that when computing forwarding paths of the SRv6 packet, the control management device obtains the SID list including the BSID.

An example is provided to describe the foregoing correspondence between the BSID and the forwarding path indicated by the BSID. A BSID 1 indicates a forwarding path 1 that is in a trusted domain, for example, indicates a path between the R2 and the R3 shown in FIG. 2b. The foregoing correspondence may be, for example, a correspondence between the BSID 1 and an SID list indicating the forwarding path 1, and may be understood with reference to Table 1.

**Table 1**

| BSID | SID list indicating forwarding paths |
|---|---|
| BSID 1 | SID 1 (indicating the node R1) |
| | SID 2 (indicating the node R2) |
| | SID 3 (indicating the node R3) |

As shown in Table 1, the forwarding path indicated by the BSID 1 is a path that successively passes through the node 1, the node 2, and the node 3. The example provided in Table 1 is only for ease of understanding, and does not constitute a limitation on embodiments of this application.

In a specific implementation, the R1 may generate an HMAC key ID and an HMAC verification value of the HMAC TLV based on a preset key and an encryption algorithm. In another specific implementation, the HMAC TLV may alternatively be generated by the control management device and then delivered to the R1. The HMAC verification value is carried in the HMAC field of the HMAC TLV shown in FIG. 1.

2. The R2 performs the HMAC verification on the received SRv6 packet.

A specific HMAC verification process is described below by using an example in which the destination address in the IPv6 packet header of the SRv6 packet is SID 2.

The R1 forwards the SRv6 packet to the node R2. In a specific implementation, after receiving the SRv6 packet, the node R2 performs HMAC computation in the HMAC computation process described above. In another specific implementation, before performing HMAC computation, the node R2 starts to perform the first step of the HMAC verification based on the destination address SID 2 carried in the SRv6 packet and a current SID indicated by the SL field in the SRH, to determine whether the destination address is consistent with the current SID. If the destination address is consistent with the current SID, it is considered that the packet passes the first step of the HMAC verification, and the second step of the HMAC verification, that is, HMAC computation is performed. If the destination address is inconsistent with the current SID, it is considered that the HMAC verification fails, and the packet is discarded.

When the HMAC computation is performed, a to-be-verified HMAC is obtained based on a plurality of specific fields used in HMAC computation described above. The to-be-verified HMAC is compared with the HMAC verification value carried in the SRv6 packet, to perform verification. If the packet passes the verification, it is considered that the packet passes the HMAC verification, and a packet processing procedure continues. If the packet fails the verification, it is considered that the packet fails the HMAC verification, and the packet is discarded.

In the HMAC verification solution described above, a large quantity of computing resources need to be occupied to perform HMAC computation. When an attacker sends a large quantity of attack packets, especially replay attack packets, to the node R2, the R2 needs to perform the HMAC verification on these packets, which severely occupies processor resources. Consequently, a normal packet cannot be effectively processed, and the node R2 cannot work normally. If an existing manner such as rate limiting or access control list (access control list, ACL) filtering is used for prevention, because a valid packet and an attack packet cannot be distinguished, and especially a replay attack packet cannot be effectively identified, the valid packet may be discarded, and a normal service is affected. In addition, because the replay attack packet cannot be identified or discarded in the foregoing HMAC verification, the large quantity of replay attack packets are normally forwarded in a network, and a large quantity of network resources are occupied.

To resolve the foregoing problem, this application provides a solution for preventing a replay attack on an SRv6 HMAC verification. Anti-replay attack verification information is added to an SRv6 packet, so that a node can determine, before performing HMAC computation, whether the received packet is a replay attack packet based on the anti-replay attack verification information. If the node determines that the received packet is a replay attack packet, the node does not perform HMAC computation and discards the packet. If the node determines that the received packet is not a replay attack packet, the node continues to perform HMAC computation. According to the foregoing solution, when an HMAC verification is used for an SRv6 packet, HMAC computation on a large quantity of replay attack packets can be avoided, thereby greatly reducing computing resources required when a processor performs the HMAC verification, improving efficiency of processing a normal packet, and effectively ensuring normal running of a service. In addition, network forwarding resources occupied by the large quantity of replay attack packets are greatly reduced.

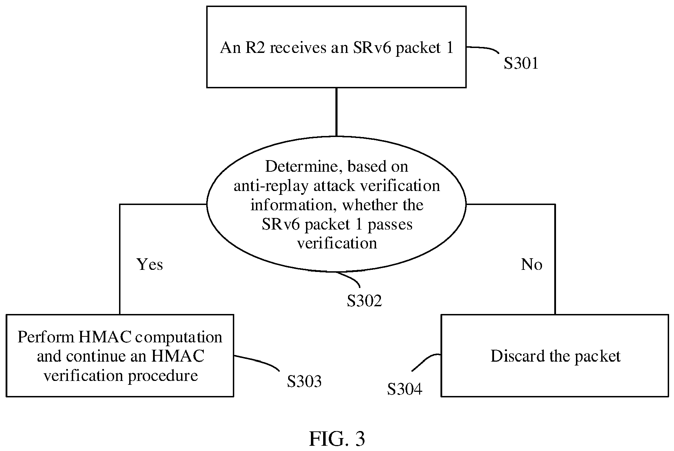

The following describes, with reference to FIG. 3, a method 300 for preventing a replay attack on an SRv6 HMAC verification provided in this application. The method 300 may be applied to the network scenario shown in FIG. 2a or FIG. 2b. The method 300 includes the following steps.

S301: A node R2 receives an SRv6 packet 1, where the SRv6 packet 1 includes anti-replay attack verification information.

S302: The node R2 performs anti-replay attack verification on the SRv6 packet 1 based on the anti-replay attack verification information. If the packet passes the verification, S303 is performed; if the packet fails the verification, S304 is performed.

S303: Perform HMAC computation on the SRv6 packet 1.

S304: Do not perform HMAC computation, and discard the packet.

In S301, in an example, the node R2 receives a normal SRv6 packet 1 from a node R1. In this case, the R2 performs S302 to perform anti-replay attack verification on the SRv6 packet 1. After the packet passes the verification, the R2 performs S303 for subsequent HMAC computation. In another example, the node R2 receives the SRv6 packet 1 from an attacker device, and the SRv6 packet 1 is a replay attack packet. In this case, the R2 may perform S302 to verify the packet. After the verification fails, the R2 performs S304 to discard the packet.

Specifically, before performing HMAC computation on the SRv6 packet 1, the node R2 performs anti-replay attack verification on the SRv6 packet 1 based on the anti-replay attack verification information, that is, determines whether the SRv6 packet 1 is a replay attack packet. If the node determines that the SRv6 packet 1 is not a replay attack packet, the node continues to perform HMAC computation. If the node determines that the SRv6 packet 1 is a replay attack packet, the node does not perform HMAC computation.

In a specific implementation, the anti-replay attack verification information may be a timestamp. When the anti-replay attack verification information is a timestamp, the SRv6 packet 1 includes a timestamp field. For example, the timestamp field may be used to carry a timestamp at which the node R1 sends the SRv6 packet 1 or a timestamp at which the SRv6 packet 1 is generated. The node R2 receives the SRv6 packet 1, checks the timestamp field in the packet, and verifies whether the timestamp carried in the packet meets a preset condition. For example, the preset condition may be that a time deviation between the timestamp carried in the packet and current time of the node R2 meets a preset condition, where for example, the time deviation is within a proper range or the time deviation is beyond an abnormal range. Alternatively, the preset condition may be that time indicated by the timestamp carried in the packet meets a preset condition, where for example, the time indicated by the timestamp is within a preset time range. If the preset condition is met, it indicates that the packet passes the verification; if the preset condition is not met, it indicates that the packet fails the verification, and the packet is discarded.

In the solution in which the anti-replay attack verification is performed by using the timestamp, if the SRv6 packet 1 is a replay attack packet, a packet header of the SRv6 packet 1 should be the same as a packet header of an SRv6 packet 2 that has been received by the node R2. Therefore, timestamps carried in the two packets are the same. In an example, the node R2 receives, at time t1, the SRv6 packet 2 sent by the R1, where time indicated by the timestamp carried in the SRv6 packet 2 is t2, and a time derivation between t1 and t2 is within a proper range. In this case, the packet passes the verification, and HMAC computation continues to be performed. Then, the R2 receives the replay attack packet SRv6 packet 1 at time t3. The timestamp carried in the SRv6 packet 1 is still t2. In this case, a time derivation between the current time t3 of the R2 and the timestamp t2 in SRv6 packet 1 exceeds a proper range. In this case, the verification fails, and HMAC computation is not performed. It can be seen that, by adding a timestamp verification in an HMAC verification process, a large quantity of replay attack packets can be identified and discarded before HMAC computation is performed. This effectively reduces computing resource consumption of a node, reduces network forwarding resources occupied by the large quantity of replay attack packets, and effectively prevents an impact of a replay attack on a normal service.

In a specific implementation, the anti-replay attack verification information may be a nonce. When the anti-replay attack verification information is a nonce, the SRv6 packet 1 includes a nonce field used to carry the nonce. After receiving the SRv6 packet 1, the R2 verifies the nonce field, and verifies, based on a locally stored nonce record of the node, whether the nonce carried in SRv6 packet 1 is valid. For example, if the nonce is stored in the local record, it is considered that the nonce carried in the SRv6 packet 1 is not a valid nonce. Therefore, the packet is discarded, and HMAC computation is not performed. If the nonce is not stored in the local record, it is considered that the nonce included in the SRv6 packet 1 is a valid nonce, and the nonce is locally stored to verify a nonce carried in a subsequent packet. HMAC computation continues to be performed on the packet that passes the verification. In this solution, a nonce is randomly and uniquely generated when a node generates a packet. Therefore, if the node R2 determines that a same nonce has been locally stored before the node R2 receives the SRv6 packet 1, the node R2 considers that the same packet has been received. In this case, the node R2 determines that the SRv6 packet 1 is a replay attack packet. It can be seen that, by adding a nonce verification in an HMAC verification process, a large quantity of replay attack packets can be identified and discarded before HMAC computation is performed. This effectively reduces computing resource consumption of a node, reduces network forwarding resources occupied by the large quantity of replay attack packets, and effectively prevents an impact of a replay attack on a normal service.

In a specific implementation, the anti-replay attack verification information may alternatively be a packet sequence number. A specific manner of performing the anti-replay attack verification using the packet sequence number is similar to the manner of performing the anti-replay attack verification using a nonce. That is, in this manner, whether a sequence number to be verified is valid is determined by comparison against a local record of the node. For a packet with an invalid sequence number, the packet is discarded, and HMAC computation is not performed. For a packet that passes the sequence number verification, HMAC computation and an HMAC verification continue to be performed. In an example, if a sequence number carried in a packet is the same as a locally recorded sequence number, the sequence number carried in the packet is considered as an invalid sequence number. If the local record does not store a sequence number that is the same as a sequence number carried in a packet, the sequence number carried in the packet is considered as a valid sequence number. In this case, the packet passes the verification, and the sequence number is stored locally.

In a specific implementation, the SRH may be extended with a new field to carry the anti-replay attack verification information. For example, an extended TLV field may be newly added to the SRH, and a type field of the newly added TLV field indicates that the TLV is used to carry the anti-replay attack verification information.

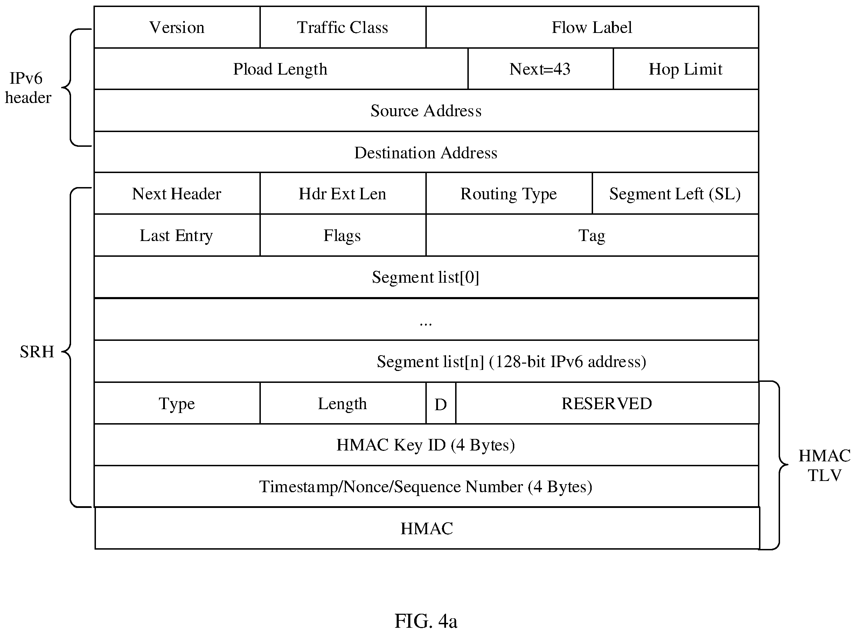

In a specific implementation, an existing HMAC TLV may alternatively be extended with a new field to carry the anti-replay attack verification information. For example, a new HMAC TLV type, such as type 7, may be newly added to indicate the anti-replay attack verification information carried in the HMAC TLV. For example, as shown in FIG. 4a, a field is newly added to the HMAC TLV field to carry the anti-replay attack verification information such as the timestamp, the nonce, and/or the sequence number.

In a specific implementation, the SRH may be alternatively extended with a new field to carry indication information 1, where the indication information 1 indicates a type of the anti-replay attack verification. In an example, the type of the anti-replay attack verification includes but is not limited to one or more of the following: anti-replay attack verification using the nonce, anti-replay attack verification using the timestamp, and anti-replay attack verification using the sequence number. In a specific implementation, the indication information 1 indicates the type of the anti-replay attack verification in a bit mapping manner. For example, a plurality of bits may be newly added to a reserved field of the SRH header, to respectively identify different types of the anti-replay attack verification. For example, the plurality of bits may include a bit T, a bit N, and a bit S. When T is denoted as 1, it indicates that the timestamp is used to verify a packet; when N is denoted as 1, it indicates that the nonce is used to verify a packet; when S is denoted as 1, it indicates that the sequence number is used to verify a packet. In a specific implementation, binary values of several bits may be alternatively used to indicate different types of the anti-replay attack verification. For example, the indication information 1 includes three bits. When the three bits are {0, 0, 0}, in other words, when a binary value is 0, it indicates that the verification is performed by using the timestamp. When the three bits are {0, 0, 1}, in other words, when a binary value is 1, it indicates that the verification is performed by using the nonce. A specific manner of representing the indication information 1 is not specifically limited in this application.

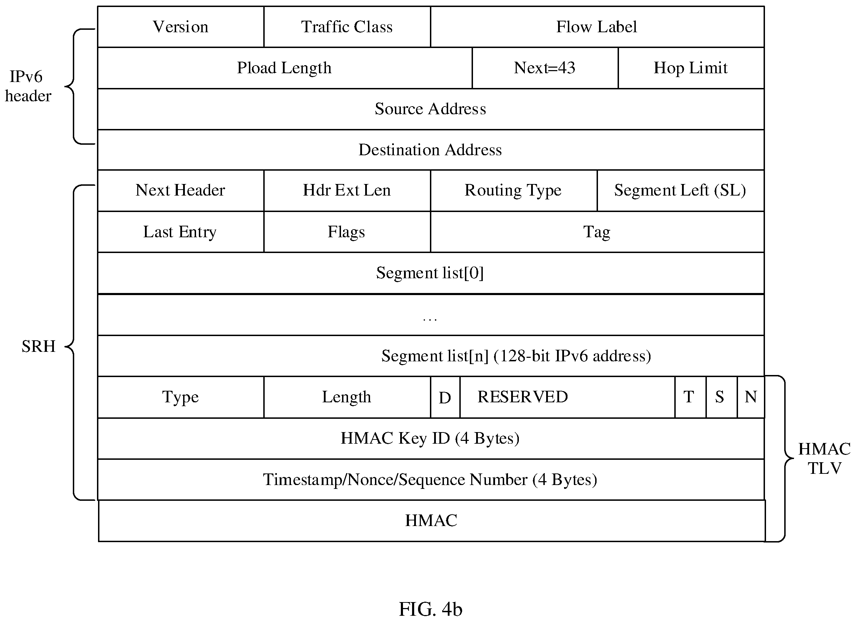

In a specific implementation, the existing HMAC TLV may alternatively be extended with a new field to carry the indication information 1. For example, a field is newly added to the HMAC TLV field to carry anti-replay attack verification information such as the timestamp, the nonce, and/or the sequence number. For example, as shown in FIG. 4b, the reserved field of the HMAC TLV field may be extended with three bits to carry the indication information 1.

It should be noted that, in this application, any anti-replay attack verification information may be independently used to verify a packet, or two or more mechanisms may be used together to perform the verification, so as to further improve an anti-replay attack capability.

In a specific implementation, specific fields used by the node R2 to perform HMAC computation include the anti-replay attack verification information. By adding the anti-replay attack verification information to HMAC computation, even if an attacker modifies a value of the anti-replay attack verification information after generating an attack packet, because HMAC computation uses the anti-replay attack verification information as a hash factor for hash computation, an HMAC obtained by the node R2 through computation is different from an HMAC carried in the packet, and the HMAC verification fails. This can effectively prevent the attack.

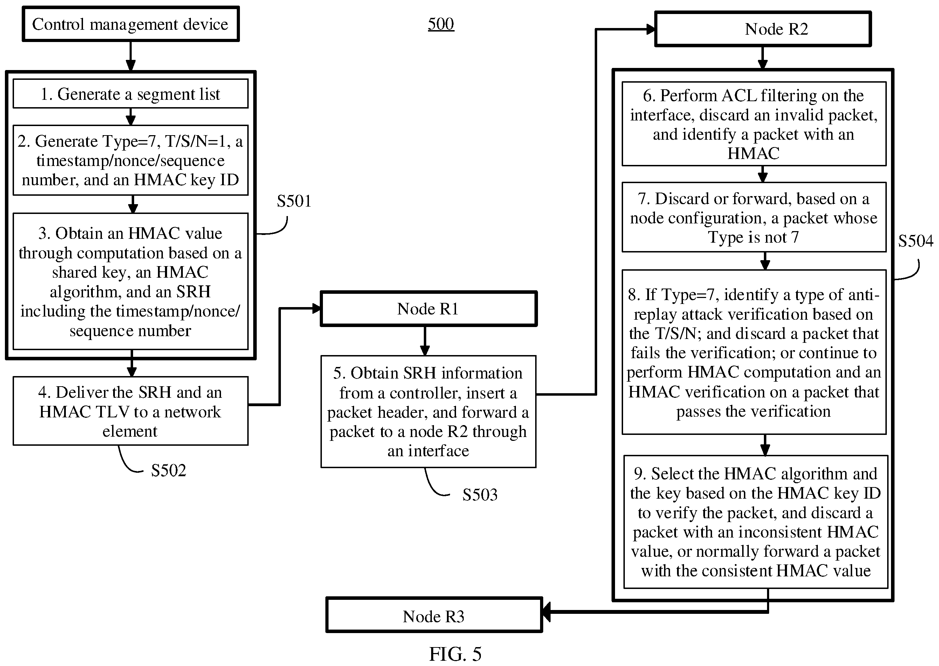

In a specific implementation, a control management device may deliver the anti-replay attack verification information to a network node, so that the node carries the anti-replay attack verification information in a generated SRv6 packet, and after receiving the corresponding packet, a node configured with an HMAC verification can perform anti-replay attack verification on the packet based on the anti-replay attack verification information carried in the packet. A method 500 for preventing a replay attack provided in this application is described below with reference to FIG. 5. The method may be applied to the scenario shown in FIG. 2b. In the method 500, differences between the method 500 and the method 300 are mainly described. For same parts in the method 300, refer to related descriptions in the method 300. Details are not described herein again. The method 500 includes the following steps.

S501: A control management device generates SRH information including an HMAC TLV, where the SRH information includes anti-replay attack verification information.

In a specific implementation, the control management device performs SRv6 path computation based on a network topology, and generates a segment list corresponding to packet forwarding paths, to guide packet forwarding in an SRv6 network. The anti-replay attack verification information such as a timestamp, a nonce, and/or a sequence number and a corresponding HMAC key ID are generated. HMAC computation is performed based on a shared key, an HMAC algorithm, and specific fields used in the HMAC computation to obtain an HMAC verification value. In a specific implementation, a key field used in the HMAC computation includes the anti-replay attack verification information.

S502: The control management device sends the SRH information to a node R1.

S503: The node R1 receives the SRH information, and generates an SRv6 packet 1 based on the SRH information.

S504: The node R1 forwards the SRv6 packet 1 to a node R2.

After the node R2 receives the SRv6 packet 1, the R2 may process the packet according to the method 300 described above. Details are not described herein again.

Persons skilled in the art may understand that specific content shown in blocks S501 and S504 in FIG. 5 is merely a specific example provided for ease of understanding the technical solutions of this application, and should not be understood as a limitation on the method 500.

In a specific implementation, the control management device may send the anti-replay attack verification information to the node R2 based on a plurality of protocols such as the Network Configuration Protocol (Network Configuration Protocol, NETCONF), the Simple Network Management Protocol (Simple Network Management Protocol, SNMP), the Path Computation Element Communication Protocol (Path Computation Element Communication Protocol, PCEP), and the Border Gateway Protocol (Border Gateway Protocol, BGP). The control management device may send the anti-replay attack verification information and other SRH information together to the node, or may separately send the anti-replay attack verification information and other SRH information based on different messages. This is not specifically limited in this application.

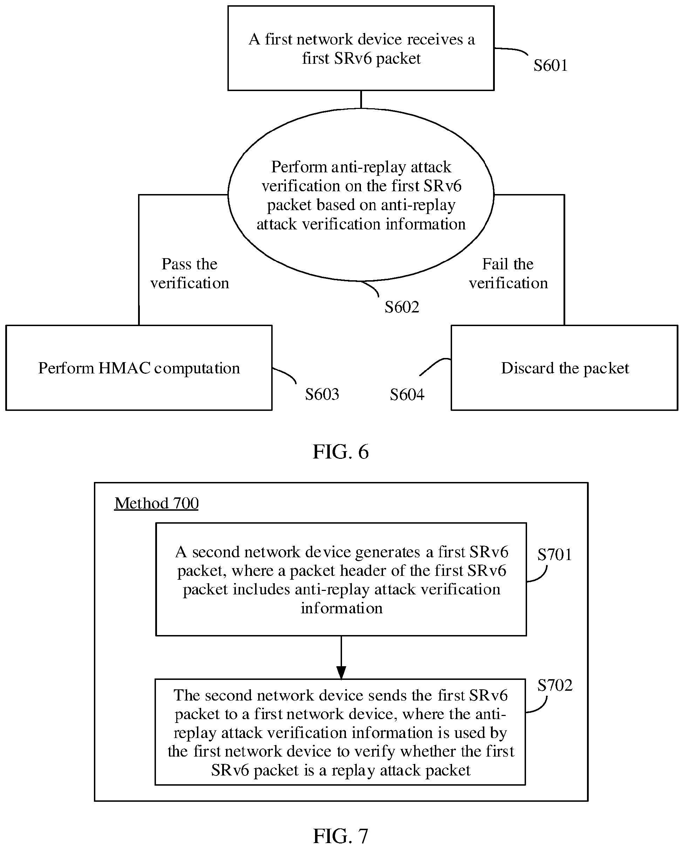

FIG. 6 shows a method 600 for preventing a replay attack on an SRv6 HMAC verification according to an embodiment of this application. The method may be applied to the network scenario shown in FIG. 2a or FIG. 2b. The method 600 may be specifically used to implement the method 300 or the method 500. The method 600 includes S601, S602, and S603, or includes S601, S602, and S604.

S601: A first network device receives a first SRv6 packet, where a packet header of the first SRv6 packet includes anti-replay attack verification information.

Specifically, the first network device receives the first SRv6 packet from a second network device. The second network device may be a normal network element in a network domain, or may be a network attacker device. When the method 600 is specifically used to implement the method 300, the first network device in S601 is equivalent to the node R2 in the method 300, and the first SRv6 packet is equivalent to the SRv6 packet 1 described in the method 300. The second network device may be the node R1 described in the method 300, or may be an attacker device.

S602: The first network device performs anti-replay attack verification on the first SRv6 packet based on the anti-replay attack verification information.

For specific descriptions of the anti-replay attack verification information described in the method 600, refer to related descriptions in the method 300. Details are not described herein again.

S603: The first network device performs HMAC computation on the first SRv6 packet that passes the verification.

S604: The first network device discards the first SRv6 packet that fails the verification.

For a specific process of each step in the method 600, refer to related descriptions in the method 300. Details are not described herein again.

FIG. 7 shows a method 700 for preventing a replay attack on an SRv6 HMAC verification according to an embodiment of this application. The method 700 may be applied to the network scenario shown in FIG. 2a or FIG. 2b. The method 700 includes the following steps.

S701: A second network device generates a first SRv6 packet, where a packet header of the first SRv6 packet includes anti-replay attack verification information.

S702: The second network device sends the first SRv6 packet to a first network device, where the anti-replay attack verification information is used by the first network device to verify whether the first SRv6 packet is a replay attack packet.

When the method 700 is specifically used to implement the method 300, the second network device may be, for example, the node R1 or the attacker device described in the method 300, and the first network device may be, for example, the node R1.

In a specific implementation, before S701, the second network device obtains the anti-replay attack verification information from a control management device. Specifically, in the method 700, the second network device may obtain the anti-replay attack verification information from the control management device in the manner described in the method 500.

For specific descriptions of the anti-replay attack verification information and related steps in the method 700, refer to related descriptions in the method 300. Details are not described herein again.

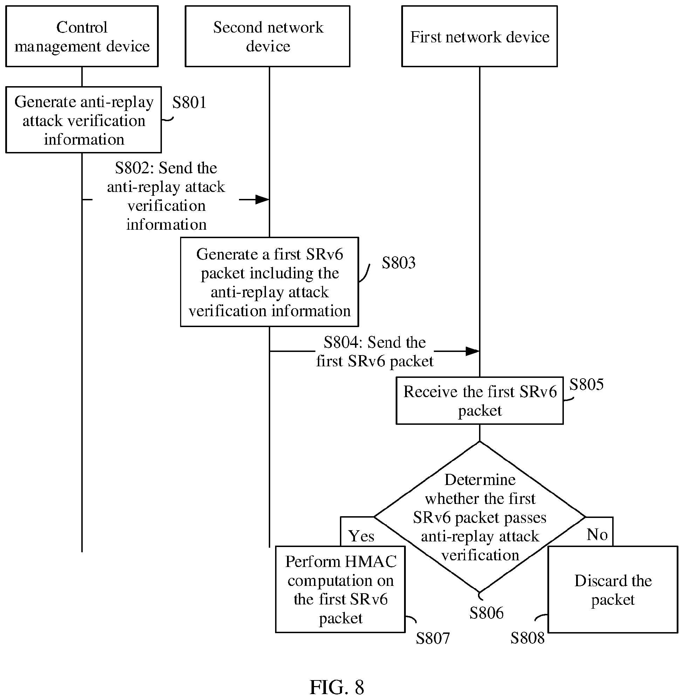

FIG. 8 shows a method 800 for preventing a replay attack on an SRv6 HMAC verification according to an embodiment of this application. The method 800 may be applied to the network scenario shown in FIG. 2a or FIG. 2b. The method 800 includes the following steps.

S801: A control management device generates anti-replay attack verification information.

S802: The control management device sends the anti-replay attack verification information to a second network device.

In a specific implementation, the control management device generates an HMAC verification policy, where the anti-replay attack verification information is carried in the HMAC verification policy, and the control management device sends the HMAC verification policy to a corresponding network node. The control management device delivers the HMAC verification policy in a centralized manner, to implement centralized control of the HMAC verification policy, so that forwarding nodes do not need to separately configure the HMAC verification policy, thereby effectively simplifying configurations of the forwarding nodes.

In a specific implementation, the control management device generates SRH information. The SRH information carries the anti-replay attack verification information and a segment list corresponding to forwarding paths. The control management device delivers the anti-replay attack verification information to the corresponding network node while delivering the SRH information to the corresponding network node. Therefore, after performing centralized path computation, the control management device can send the anti-replay attack verification information together with path information to the corresponding forwarding nodes, thereby effectively simplifying the configurations of forwarding nodes.

The method 800 may be specifically used to implement the method 500 and the method 300. In this case, the second network device in the method 800 is equivalent to the node R1 described in the method 300 or 500.

In a specific implementation, the method 800 may further include the following steps.

S803: The second network device generates a first SRv6 packet, where a packet header of the first SRv6 packet includes the anti-replay attack verification information.

S804: The second network device sends the first SRv6 packet to a first network device, where the anti-replay attack verification information is used by the first network device to verify whether the first SRv6 packet is a replay attack packet.

For related implementations of S803 and S804, refer to descriptions of S701 and S702 in the method 700. Details are not described herein again.

In a specific implementation, the method 800 may further include the following steps.

S805: The first network device receives the first SRv6 packet, where the packet header of the first SRv6 packet includes the anti-replay attack verification information.

For specific descriptions of the anti-replay attack verification information described in the method 800, refer to related descriptions in the method 300. Details are not described herein again.

S806: The first network device performs anti-replay attack verification on the first SRv6 packet to determine whether the first SRv6 packet passes the verification.

S807: The first network device performs HMAC computation on the first SRv6 packet that passes the verification.

S808: The first network device discards the first SRv6 packet that fails the verification.

For related implementations of S805 to S808, refer to related descriptions of S601 to S604 in the method 600. Details are not described herein again.

The following describes different implementations in the method 600, the method 700, and the method 800.

In a specific implementation, the anti-replay attack verification information includes one or more of the following information: a timestamp, a nonce, and a sequence number.

In a specific implementation, the anti-replay attack verification information includes the timestamp, and that the first network device performs anti-replay attack verification on the first SRv6 packet includes: The first network device verifies whether a deviation between the timestamp and current time of the first network device meets a preset condition.

In a specific implementation, the anti-replay attack verification information includes the nonce, and that the first network device performs anti-replay attack verification on the first SRv6 packet includes: The first network device verifies, based on a locally recorded nonce, whether the nonce carried in the first SRv6 packet is valid.

In a specific implementation, the anti-replay attack verification information includes the sequence number, and that the first network device performs anti-replay attack verification on the first SRv6 packet includes: The first network device verifies, based on a locally recorded packet sequence number, whether the sequence number carried in the first SRv6 packet is valid.

In a specific implementation, the packet header of the first SRv6 packet includes an extended type length value TLV field, and the extended TLV field is used to carry the anti-replay attack verification information. In a specific implementation, a Type type field of the TLV field indicates that the TLV field is used to carry the SRv6 HMAC anti-replay attack verification information. In a specific implementation, the extended TLV field is an extended HMAC TLV field, and the extended HMAC TLV field is further used to carry an HMAC key ID and an HMAC.

In a specific implementation, the packet header of the first SRv6 packet includes first indication information, and the first indication information is used to identify a type of the anti-replay attack verification. When the method 600, 700, or 800 is specifically used to implement the method 300 or 500, the first indication information is equivalent to the indication information 1 in the method 300. Related descriptions of the first indication information are not described herein again.

In a specific implementation, the type of the anti-replay attack verification includes one or more of the following:
anti-replay attack verification using the nonce;
anti-replay attack verification using the timestamp; and
anti-replay attack verification using the sequence number.

In a specific implementation, the first indication information includes a first bit, and the first bit is used to identify whether the anti-replay attack verification is performed by using the nonce.

In a specific implementation, the first indication information includes a second bit, and the second bit is used to identify whether the anti-replay attack verification is performed by using the timestamp.

In a specific implementation, the first indication information includes a third bit, and the third bit is used to identify whether the anti-replay attack verification is performed by using the sequence number.

In a specific implementation, the anti-replay attack verification information is used as a hash factor of HMAC computation to perform the HMAC computation.

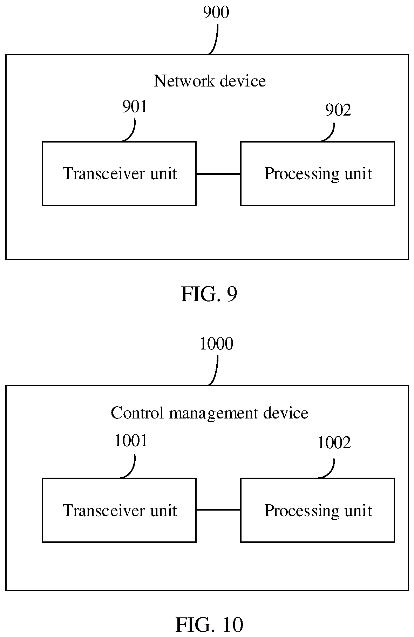

In addition, an embodiment of this application further provides a network device 900. FIG. 9 is a schematic diagram of a structure of a network device according to an embodiment of this application. The network device 900 includes a transceiver unit 901 and a processing unit 902. In a specific implementation, the network device 900 may be configured to perform the method 300, the method 500, or the method 600. The transceiver unit 901 may be configured to perform sending and receiving operations performed by the node R2 in the embodiment corresponding to the method 300 or the method 500, or configured to perform sending and receiving operations performed by the first network device in the method 600 or the method 800. The processing unit 902 may be configured to perform an operation other than the sending and receiving operations performed by the node R2 in the embodiment corresponding to the method 300 or the method 500, or configured to perform an operation other than the sending and receiving operations performed by the first network device in the method 600 or the method 800. For example, when the network device 900 is the first network device in the method 600 or the method 800, the transceiver unit 901 is configured to receive a first SRv6 packet, and the processing unit 902 is configured to: perform anti-replay attack verification on the first SRv6 packet, and perform HMAC computation on the first SRv6 packet that passes the verification or discard the first SRv6 packet that fails the verification.

In another specific implementation, the transceiver unit 901 may be configured to perform sending and receiving operations performed by the node R1 or the attacker device in the embodiment corresponding to the method 300 or the method 500, or configured to perform sending and receiving operations performed by the second network device in the method 700 or the method 800. The processing unit 902 may be configured to perform an operation other than the sending and receiving operations performed by the node R1 or the attacker device in the embodiment corresponding to the method 300 or the method 500, or configured to perform an operation other than the sending and receiving operations performed by the second network device in the method 700 or the method 800. For example, when the network device 900 is the second network device in the method 700 or the method 800, the processing unit 902 is configured to generate a first SRv6 packet that carries anti-replay attack verification information, and the transceiver unit 901 is configured to send the first SRv6 packet to a first network device.

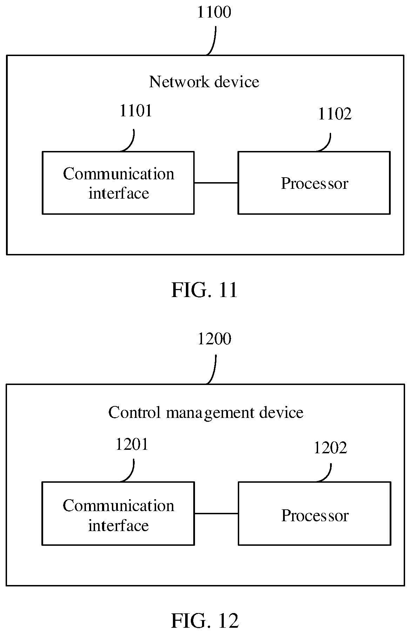

In the network device 900, a function of the transceiver unit 901 may be specifically implemented by a communication interface, and a function of the processing unit 902 may be specifically implemented by a processor. In a specific example, functions of the transceiver unit 901 and the processing unit 902 may be implemented by a communication interface 1101 and a processor 1102 shown in FIG. 11.

An embodiment of this application further provides a control management device 1000, as shown in FIG. 10. FIG. 10 is a schematic diagram of a structure of a control management device according to an embodiment of this application. The control management device 1000 includes a transceiver unit 1001 and a processing unit 1002. The transceiver unit 1001 is configured to perform sending and receiving operations performed by the control management device in embodiments of this application. The processing unit 1002 is configured to perform an operation other than the sending and receiving operations performed by the control management device mentioned in embodiments of this application. For example, when the control management device is specifically configured to implement the method 800, the processing unit 1002 is configured to generate SRH information including anti-replay attack verification information, and the transceiver unit 1001 is configured to send the SRH information to a second network device. In the control management device 1000, a function of the transceiver unit 1001 may be specifically implemented by a communication interface, and a function of the processing unit 1002 may be specifically implemented by a processor. In a specific example, functions of the transceiver unit 1001 and the processing unit 1002 may be implemented by a communication interface 1201 and a processor 1202 shown in FIG. 12.

An embodiment of this application further provides a network device 1100. FIG. 11 is a schematic diagram of a structure of a network device 1100 according to an embodiment of this application. The network device 1100 includes a communication interface 1101 and a processor 1102 connected to the communication interface 1101. In a specific implementation, the network device 1100 may be configured to perform the method 300, the method 500, or the method 600. The communication interface 1101 may be configured to perform sending and receiving operations performed by the node R2 in the embodiment corresponding to the method 300 or the method 500, or configured to perform sending and receiving operations performed by the first network device in the method 600 or the method 800. The processor 1102 may be configured to perform an operation other than the sending and receiving operations performed by the node R2 in the embodiment corresponding to the method 300 or the method 500, or configured to perform an operation other than the sending and receiving operations performed by the first network device in the method 600 or the method 800. For example, when the network device 1100 is the first network device in the method 600 or the method 800, the communication interface 1101 is configured to receive a first SRv6 packet, and the processor 1102 is configured to: perform anti-replay attack verification on the first SRv6 packet, and perform HMAC computation on the first SRv6 packet that passes the verification or discard the first SRv6 packet that fails the verification.

In another specific implementation, the communication interface 1101 may be configured to perform sending and receiving operations performed by the node R1 or the attacker device in the embodiment corresponding to the method 300 or the method 500, or configured to perform sending and receiving operations performed by the second network device in the method 700 or the method 800. The processor 1102 may be configured to perform an operation other than the sending and receiving operations performed by the node R1 or the attacker device in the embodiment corresponding to the method 300 or the method 500, or configured to perform an operation other than the sending and receiving operations performed by the second network device in the method 700 or the method 800. For example, when the network device 1100 is the second network device in the method 700 or the method 800, the processor 1102 is configured to generate a first SRv6 packet that carries anti-replay attack verification information, and the communication interface 1101 is configured to send the first SRv6 packet to a first network device.

In addition, an embodiment of this application further provides a control management device 1200. FIG. 12 is a schematic diagram of a structure of a control management device according to an embodiment of this application. The control management device 1200 includes a communication interface 1201 and a processor 1202 connected to the communication interface 1201. The communication interface 1201 is configured to perform sending and receiving operations performed by the control management device in embodiments of this application. The processor 1202 is configured to perform an operation other than the sending and receiving operations performed by the control management device mentioned in embodiments of this application. For example, when the control management device is specifically configured to implement the method 800, the processor 1202 is configured to generate SRH information including anti-replay attack verification information, and the communication interface 1201 is configured to send the SRH information to a second network device.

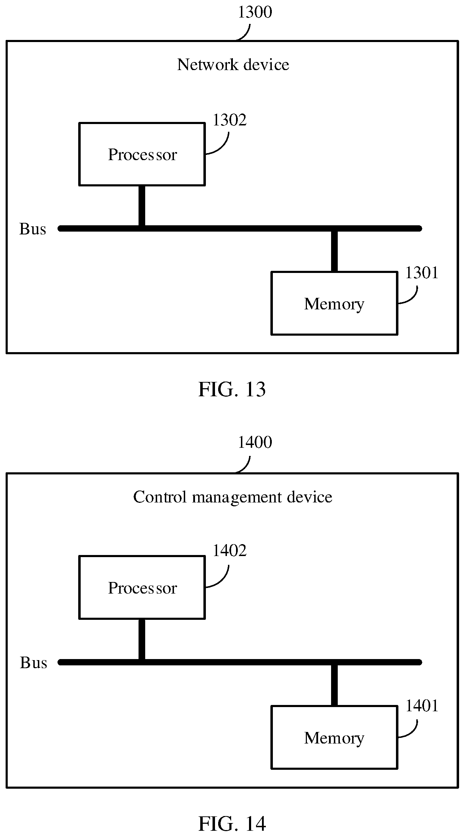

In addition, an embodiment of this application further provides a network device 1300. FIG. 13 is a schematic diagram of a structure of a network device according to an embodiment of this application. The network device 1300 includes a memory 1301 and a processor 1302. The memory 1301 is configured to store program code. The processor 1302 is configured to run instructions in the program code, so that the network device 1300 performs an operation performed by the node R2, the node R1, or the attacker device in the embodiment corresponding to the method 300 or the method 500, or performs an operation performed by the first network device, the second network device, or the attacker device in the method 600, the method 700, or the method 800.

In addition, an embodiment of this application further provides a control management device 1400. FIG. 14 is a schematic diagram of a structure of a control management device according to an embodiment of this application. The control management device 1400 includes a memory 1401 and a processor 1402. The memory 1401 is configured to store program code. The processor 1402 is configured to run instructions in the program code, so that the control management device 1400 performs an operation performed by the control management device in embodiments of this application.

In addition, an embodiment of this application further provides a schematic diagram of another network device 1500. The network device 1500 may be used in a network architecture shown in FIG. 2a or FIG. 2b, and the network device 1500 may be any network device described above. For example, the network device 1500 may be the R2 in the network architecture shown in FIG. 2a or FIG. 2b, and is configured to perform an operation performed by the R2 in the method 300 or the method 500 or an operation performed by the first network device in the method 600 or the method 800. For example, the network device 1500 may be the R1 in the network architecture shown in FIG. 2a or FIG. 2b, and is configured to perform an operation performed by the R1 in the method 300 or the method 500 or an operation performed by the first network device in the method 700 or the method 800.

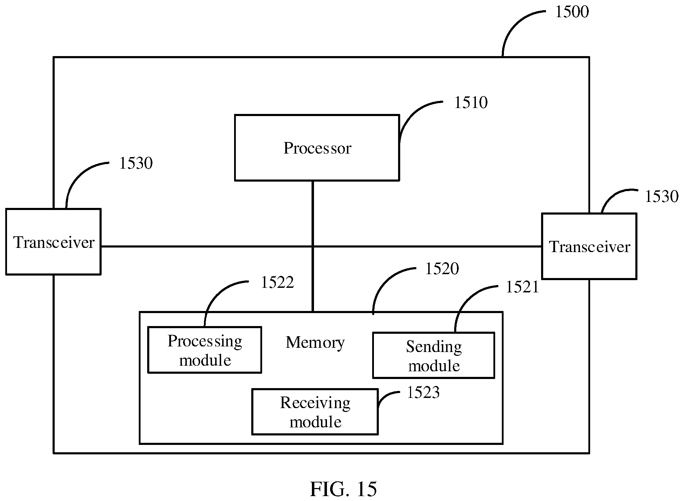

As shown in FIG. 15, the network device 1500 may include a processor 1510, a memory 1520 connected to the processor 1510 in a coupling manner, and a transceiver 1530. In an implementation, the transceiver 1530 may be a communication interface. The memory 1520 stores computer-readable instructions. The computer-readable instructions may include a plurality of software modules, for example, a sending module 1521, a processing module 1522, and a receiving module 1523. After executing each software module, the processor 1510 may perform a corresponding operation as indicated by each software module. In this embodiment, an operation performed by a software module is actually the operation performed by the processor 1510 based on the indication of the software module. For example, a receiving module 1523 is configured to perform a receiving operation. A processing module 1522 is configured to perform an operation other than receiving and sending operations. A sending module 1521 is configured to perform a sending operation. In addition, after executing the computer-readable instructions in the memory 1520, the processor 1510 may perform, based on an indication of the computer readable instructions, all operations that can be performed by a network device, for example, an operation performed by the first network device in the embodiment corresponding to the method 600 or the method 800, or an operation performed by the second network device in the embodiment corresponding to the method 700.

The processor mentioned in embodiments of this application may be a CPU, an NP, or a combination of a CPU and an NP, or may be a hardware chip. The hardware chip may be an ASIC, a PLD, or a combination thereof. The PLD may be a CPLD, an FPGA, a GAL, or any combination thereof. The processor may be one processor, or may include a plurality of processors. The memory may include a volatile memory (English: volatile memory) such as a RAM; the memory may include a non-volatile memory (English: non-volatile memory) such as a ROM, a flash memory (English: flash memory), an HDD, or an SSD; or the memory may include a combination of the foregoing types of memories. The memory may be one memory, or may include a plurality of memories.

An embodiment of this application further provides a computer-readable storage medium. The computer-readable storage medium stores instructions. When the instructions are run on a computer, the computer is enabled to perform an operation performed by the node R2, the node R1, or the attacker device in the embodiment corresponding to the method 300 or the method 500, the computer is enabled to perform an operation performed by the first network device, the second network device, or the attacker device in the method 600, the method 700, or the method 800, or the computer is enabled to perform an operation performed by the control management device in embodiments of this application.

An embodiment of this application further provides a communication system. The communication system includes the foregoing control management device and any network device described above. For example, the network device may be, for example, the node R2 that performs the method 300 or the first network device in the method 600.

It may be clearly understood by persons skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into units is merely logical service division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

Persons skilled in the art should be aware that, in the foregoing one or more examples, services described in the present invention may be implemented by hardware, software, firmware, or any combination thereof. When the present invention is implemented by the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose computer or a dedicated computer.

The objectives, technical solutions, and beneficial effects of the present invention have been further described in detail in the foregoing specific implementations. It should be understood that the foregoing descriptions are merely specific implementations of the present invention.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not make the essence of the corresponding technical solutions depart from the scope of the technical solutions of the foregoing embodiments of this application.

## Claims

1. A method for preventing a replay attack on a segment routing over Internet Protocol version 6 keyed hashed message authentication code SRv6 HMAC verification, comprising:
receiving, by a first network device, a first SRv6 packet, wherein a packet header of the first SRv6 packet comprises anti-replay attack verification information;
performing, by the first network device, anti-replay attack verification on the first SRv6 packet based on the anti-replay attack verification information; and
performing, by the first network device, HMAC computation on the first SRv6 packet that passes the verification.

2. The method according to claim 1, wherein the anti-replay attack verification information comprises one or more of the following information:
a timestamp, a nonce, and a sequence number.

3. The method according to claim 1 or 2, wherein the anti-replay attack verification information comprises the timestamp, and the performing, by the first network device, anti-replay attack verification on the first SRv6 packet comprises:
verifying, by the first network device, whether a deviation between the timestamp and current time of the first network device satisfies a preset condition.

4. The method according to any one of claims 1 to 3, wherein the anti-replay attack verification information comprises the nonce, and the performing, by the first network device, anti-replay attack verification on the first SRv6 packet comprises:
verifying, by the first network device based on a locally recorded nonce, whether the nonce carried in the first SRv6 packet is valid.

5. The method according to any one of claims 1 to 4, wherein the anti-replay attack verification information comprises the sequence number, and the performing, by the first network device, anti-replay attack verification on the first SRv6 packet comprises:
verifying, by the first network device based on a locally recorded packet sequence number, whether the sequence number carried in the first SRv6 packet is valid.

6. The method according to any one of claims 1 to 5, wherein the packet header comprises an extended type length value TLV field, and the extended TLV field is used to carry the anti-replay attack verification information.

7. The method according to claim 5, wherein a Type type field of the TLV field indicates that the TLV field is used to carry the SRv6 HMAC anti-replay attack verification information.

8. The method according to claim 6 or 7, wherein the extended TLV field is an extended HMAC TLV field, and the extended HMAC TLV field is further used to carry an HMAC encryption identifier HMAC key ID and an HMAC.

9. The method according to any one of claims 1 to 8, wherein the packet header comprises first indication information, and the first indication information is used to identify a type of the anti-replay attack verification.

10. The method according to claim 9, wherein the type of the anti-replay attack verification comprises one or more of the following:
anti-replay attack verification using the nonce;
anti-replay attack verification using the timestamp; and
anti-replay attack verification using the sequence number.

11. The method according to claim 9 or 10, wherein the first indication information comprises a first bit, and the first bit is used to identify whether the anti-replay attack verification is performed by using the nonce.

12. The method according to any one of claims 9 to 11, wherein the first indication information comprises a second bit, and the second bit is used to identify whether the anti-replay attack verification is performed by using the timestamp.

13. The method according to any one of claims 9 to 12, wherein the first indication information comprises a third bit, and the third bit is used to identify whether the anti-replay attack verification is performed by using the sequence number.

14. The method according to any one of claims 1 to 13, wherein the anti-replay attack verification information is used as a hash factor of HMAC computation to perform the HMAC computation.

15. The method according to any one of claims 1 to 14, wherein the method further comprises:
receiving, by the first network device, a second SRv6 packet, wherein a packet header of the second SRv6 packet comprises anti-replay attack verification information;
performing, by the first network device, anti-replay attack verification on the second SRv6 packet based on the anti-replay attack verification information; and
discarding, by the first network device, the second SRv6 packet that fails the verification, and stopping performing HMAC computation.

16. A method for preventing a replay attack on a segment routing over Internet Protocol version 6 keyed hashed message authentication code SRv6 HMAC verification, comprising:
generating, by a second network device, a first SRv6 packet, wherein a packet header of the first SRv6 packet comprises anti-replay attack verification information; and
sending, by the second network device, the first SRv6 packet to a first network device, wherein the anti-replay attack verification information is used by the first network device to verify, before HMAC computation is performed, whether the first SRv6 packet is a replay attack packet.

17. The method according to claim 16, wherein the anti-replay attack verification information comprises one or more of the following information:
a timestamp, a nonce, and a sequence number.

18. The method according to claim 16 or 17, wherein the packet header comprises an extended type length value TLV field, and the extended TLV field is used to carry the anti-replay attack verification information.

19. The method according to claim 18, wherein a Type type field of the TLV field indicates that the TLV field is used to carry the anti-replay attack verification information.

20. The method according to claim 17 or 18, wherein the extended TLV field is an extended HMAC TLV field, and the extended HMAC TLV field is further used to carry an HMAC encryption identifier HMAC key ID and an HMAC.

21. The method according to any one of claims 16 to 20, wherein the packet header comprises first indication information, and the first indication information is used to identify a type of anti-replay attack verification.

22. The method according to claim 21, wherein the type of the anti-replay attack verification comprises one or more of the following:
anti-replay attack verification using the nonce;
anti-replay attack verification using the timestamp; and
anti-replay attack verification using the sequence number.

23. The method according to claim 21 or 22, wherein the first indication information comprises a first bit, and the first bit is used to identify whether the anti-replay attack verification is performed by using the nonce.

24. The method according to any one of claims 21 to 23, wherein the first indication information comprises a second bit, and the second bit is used to identify whether the anti-replay attack verification is performed by using the timestamp.

25. The method according to any one of claims 21 to 24, wherein the first indication information comprises a third bit, and the third bit is used to identify whether the anti-replay attack verification is performed by using the sequence number.

26. The method according to any one of claims 16 to 25, wherein the second network device obtains the anti-replay attack verification information from a control management device.

27. A first network device, comprising:
a memory, storing a program; and
a processor, configured to execute the program, so that the first network device performs the method according to any one of claims 1 to 15.

28. A second network device, comprising:
a memory, storing a program; and
a processor, configured to execute the program, so that the first network device performs the method according to any one of claims 16 to 26.

29. A communication system, comprising the first network device according to claim 27 and the second network device according to claim 28.

30. A computer storage medium, comprising computer-readable instructions, wherein when the computer-readable instructions are run on a computer, the computer is enabled to perform the method according to any one of claims 1 to 26.

31. A computer program product, wherein when the computer program product runs on a computer, the computer is enabled to perform the method according to any one of claims 1 to 26.
